# EUROPEAN PATENT SPECIFICATION

(11) **EP 2 638 648 B1**
(45) Date of publication and mention of the grant of the patent: **30.05.2018**
(21) Application number: 10859483.9
(22) Date of filing: 10.11.2010
(51) Int. Cl.: H04L 1/00, H04W 72/00

(54) **METHOD AND ARRANGEMENT FOR INTERFERENCE VARIANCE REDUCTION IN A WIRELESS COMMUNICATION SYSTEM**
VERFAHREN UND ANORDNUNG ZUR VERRINGERUNG DER INTERFERENZVARIANZ IN EINEM DRAHTLOSEN KOMMUNIKATIONSSYSTEM
PROCÉDÉ ET AGENCEMENT POUR RÉDUCTION DE VARIANCE DE BROUILLAGE DANS UN SYSTÈME DE COMMUNICATION SANS FIL

(43) Date of publication of application: 18.09.2013
(73) Proprietor: Telefonaktiebolaget LM Ericsson (publ), 164 83 Stockholm (SE)
(72) Inventor: MANSSOUR, Jawad, S-113 55 Stockholm (SE); FANTAYE, Girum Alebachew, S-164 37 Kista (SE)
(74) Representative: Brann AB
(86) International application number: PCT/SE2010/051229
(87) International publication number: WO 2012/064240

(56) References cited:
- WO-A1-2009/136825
- US-A1- 2008 159 323
- US-A1- 2010 271 963
- STERNAD, M. ET AL.: 'Towards Systems Beyond 3G Based on Adaptive OFDMA Transmission' PROCEEDINGS OF THE IEEE, [Online] vol. 95, no. 12, December 2007, pages 2432 - 2455, XP011197861 Retrieved from the Internet: <URL:http://ieeexplore.ieee.org/stamp/stamp .jsp?tp=&arnumber=4389761> [retrieved on 2011-07-05]
- YIWEI YU ET AL.: 'Performance analysis of soft frequency reuse for inter-cell interference coordination in LTE networks' COMMUNICATIONS AND INFORMATION TECHNOLOGIES (ISCIT), 2010 INTERNATIONAL SYMPOSIUM ON, [Online] 26 October 2010 - 29 October 2010, pages 504 - 509, XP031833159 Retrieved from the Internet: <URL:http://ieeexplore.ieee.org/stamp/stamp .jsp?tp=&arnumber=5665044&isnumber=5664831> [retrieved on 2011-07-05]

## Description

### TECHNICAL FIELD

The present disclosure relates to a radio node and a method in the radio node of reducing a signal to noise and interference ratio requirement for a transmission in a scheduling interval.

### BACKGROUND

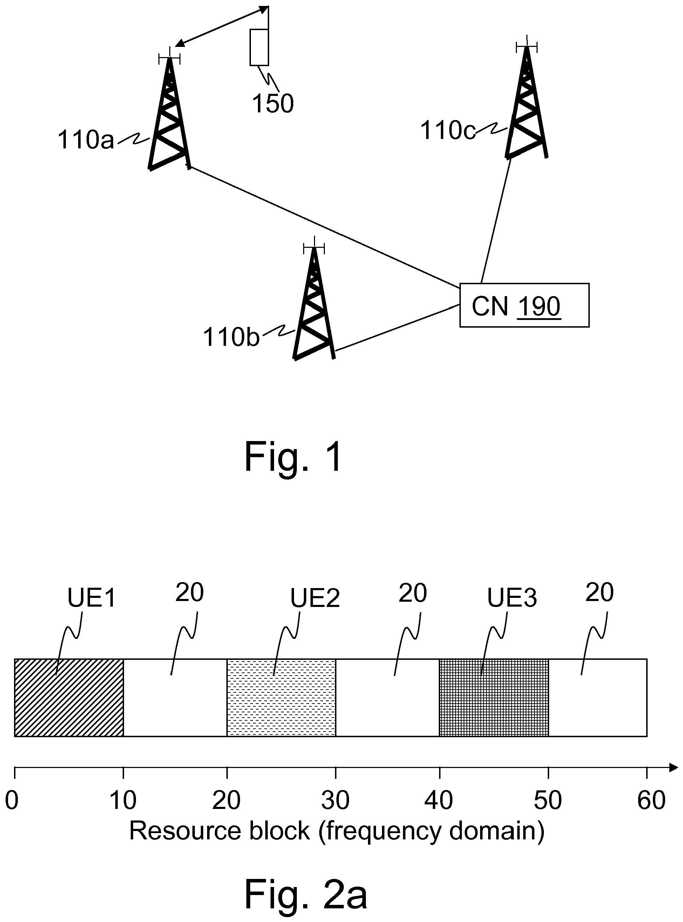

The Universal Mobile Telecommunication System (UMTS) is one of the third generation mobile communication technologies designed to succeed GSM. 3GPP Long Term Evolution (LTE) is a project within the 3^{rd} Generation Partnership Project (3GPP) to improve the UMTS standard to cope with future requirements in terms of improved services such as higher data rates, improved efficiency, lowered costs etc. The Universal Terrestrial Radio Access Network (UTRAN) is the radio access network of a UMTS and Evolved UTRAN (E-UTRAN) is the radio access network of an LTE system. In an E-UTRAN, a user equipment (UE) 150 is wirelessly connected to a radio base station (RBS) 110a commonly referred to as an eNodeB or eNB (E-UTRAN NodeB), as illustrated in **Figure 1****.** The eNBs 110a-c are directly connected to the core network (CN) 190.

Radio Resource Management (RRM) plays a crucial role in how resources in a wireless communications system are used. In particular, RRM techniques in wireless communications systems are of high importance as they largely influence how efficiently the system is used. Two RRM functionalities, scheduling and Link Adaptation (LA), play a central role for resource allocation and have a significant influence on system performance. These two RRM functionalities work tightly together. The scheduling allocates a certain part of a spectrum, i.e. of the available frequency resources, to a certain UE during a certain amount of time. The LA computes how many bits that may be transmitted in the scheduled part of the frequency resource given operating channel conditions, a transmit power and a desired probability of a correct reception.

The scheduling and LA are used in a way that optimizes a frequency resource utilization in every cell separately. Other RRM functionalities promote the coordination between different cells, and are also very important for a good wireless communications system performance. For instance, schemes that try to mitigate and coordinate interference among different cells - commonly referred to as Inter-Cell Interference Coordination (ICIC) schemes - constitute one of the most intriguing areas in RRM. ICIC schemes try to coordinate a generated inter-cell interference between cells so that the effect of the generated interference becomes less detrimental, typically by utilizing feedback and exchanging information between neighboring radio base stations. ICIC schemes usually work on a slower basis than the scheduling and LA in order to mitigate the increased overhead and complexity arising from the extra information exchange, signaling, and processing needed for ICIC.

A main operating principle in conventional scheduling and LA is to transmit as much data bits as possible given a certain frequency resource allocation, or expressed in another way, to find a smallest possible frequency resource allocation given a certain number of data bits to transmit. At the same time, a certain probability of correct reception under the operating channel conditions should be satisfied. A commonly used criterion for the probability of correct reception is a Block Error Rate (BLER) target. The main operating principle is thus to maximize the spectral efficiency measured in bits per second and per Hz (bps/Hz) for the allocated resources. The more bits that may be transmitted over a certain part of the frequency resources over a fixed amount of time, the higher the spectral efficiency will be.

The spectral efficiency measure is without doubt a very important performance measure. However, the measure is mainly significant in case of fully loaded wireless communications systems. In other words, if the system is always fully loaded, i.e. if there is at least as much traffic to serve as the radio resources may support, then a higher spectral efficiency will lead to a better utilization of the resources as more UEs may be served. However, wireless communications systems are seldom fully or even highly loaded. Measurements from networks in operation show that only a fraction of the frequency resources are utilized most of the time and that all traffic may be served using just a portion of the available spectrum, with the exception for traffic in high density areas at peak hours. Most of the time UEs will be scheduled in a part of the frequency bandwidth only, whereas other parts of the frequency bandwidth will be free from transmissions, as illustrated in **Figure 2a****.** Frequency resources allocated to three UEs, UE1, UE2 and UE3, in a given scheduling interval only sums up to a frequency resource utilization of around 50% of the total frequency bandwidth, and the rest of the frequency resources 20 are unutilized. Such a scenario has two main limitations:
1. By scheduling with a high spectral efficiency, the Signal to Interference and Noise Ratio (SINR) requirement will be strict in order to support the efficient high order Modulation and Coding Scheme (MCS).
2. By transmitting on just a part of the bandwidth, while leaving other parts of the bandwidth without transmissions, the inter-cell interference will vary significantly over the frequencies. It is not only the level of interference that affects the performance in a cell. The variation in the interference has an even more important effect on the performance, as the fluctuation in interference leads to a high unpredictability in the interference profile, thus making it hard to produce reliable interference estimations.

These two limitations have consequences both on the performance in the cell itself, i.e. on the intra-cell performance, as well as on the inter-cell performance, i.e. how a cell affects its neighbors.

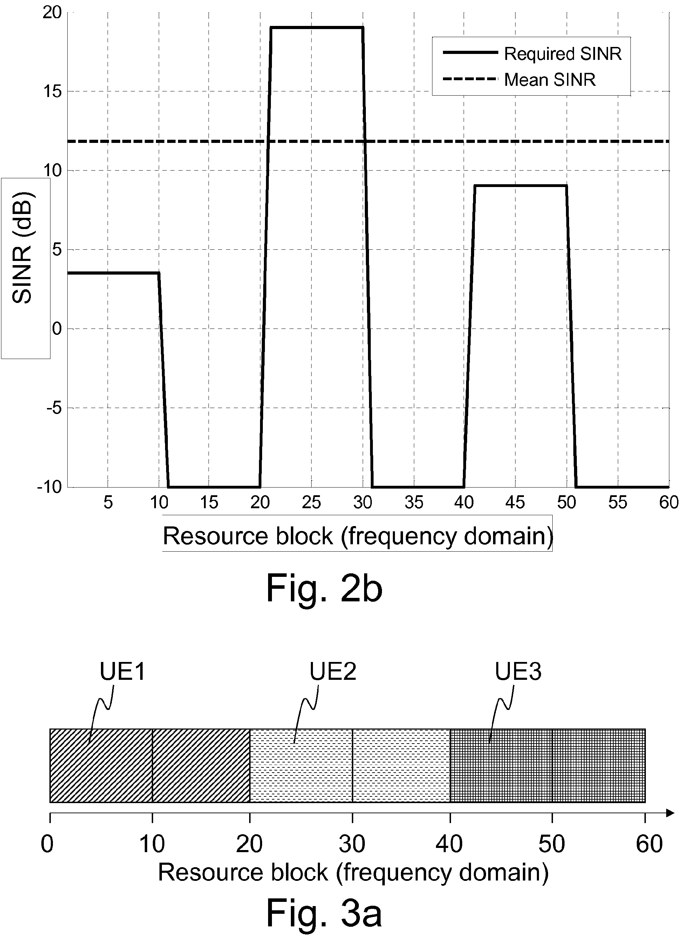

**Figure 2b** illustrates required SINR as a function of frequency resource blocks for a scheduling interval corresponding to the resource allocation illustrated in **Figure 2a****,** as well as a mean value of the required SINR for each resource block. The required SINR is the level needed to meet the requirements for a correct reception for a specific MCS and a number of allocated resource blocks. The MCS and the number of resource blocks are obtained from 3GPP tables, whereas the resulting required SINR thresholds are determined from measurements in an LTE system based on the performance of turbo decoders. The large variance of the required SINR over the resource blocks is clearly illustrated and is due to that the UEs transmit only on a part of the resource blocks, with unused resource blocks in between. In resource blocks 0-10, UE1 is transmitting and the required SINR is 3,5 dB. In resource blocks 10-20 there is no transmission so the required SINR level goes down. For illustration purposes, a floor of -10dB is set for the non-utilized resource blocks. In resource block 20-30 the required SINR level goes up to 19 dB when UE2 is transmitting, and in resource blocks 40-50 the required SINR level is 9 dB. This variance may be translated into a large variance in the inter-cell interference levels.

With conventional LA, an MCS of highest order, also referred to as the most efficient MCS, is chosen for a certain transmit/receive power, a desired Transport Block Size (TBS) and the resulting SINR based on the prevailing channel quality. However, the highest order of MCS typically means assigning the transport block to the smallest possible amount of resource blocks, which requires a high SINR. With a high SINR requirement, more power needs to be transmitted/received in order to reach a satisfactory performance for a given channel quality. A higher SINR requirement may thus be translated into a higher transmit power, and consequently into a higher interference to other cells.

In addition to a potentially higher interference, transmissions on only parts of the available resource blocks cause large fluctuations in the interference. These fluctuations would significantly affect a performance of decoders and many other functions such as LA and scheduling, since the performance is dependent on a reliable prediction of the interference.

WO 2009/136825 A1 describes a method and arrangement in a node for scheduling and allocating of frequency resources based on received signal power of a user equipment, leading to a better utilization of uplink power, where resource blocks are so distributed that SINR of all the user equipments reach a selected SINR target.

### SUMMARY

An object is therefore to address some of the problems and disadvantages outlined above, and to allow a reduction of the SINR requirement for a transmission in a scheduling interval.

In accordance with an embodiment, a method in a radio node of a wireless communication system, of reducing a signal to noise and interference ratio requirement for a transmission in a scheduling interval is provided. The transmission is being performed in a cell served by the radio node. The method comprises estimating a frequency resource utilization in the scheduling interval, and comparing the estimated frequency resource utilization with a first threshold. When the estimated frequency resource utilization is equal to or below the first threshold, the method further comprises increasing the frequency resource utilization for the transmission, and adjusting a link adaptation for the transmission based on the increased frequency resource utilization, wherein adjusting the link adaptation comprises adjusting at least one of a modulation and a code rate.

In accordance with another embodiment, a radio node configured to be used in a wireless communication system, and to reduce a signal to noise and interference ratio requirement for a transmission in a scheduling interval is provided, where the transmission is being performed in a cell served by the radio node. The radio node comprises an estimating circuit configured to estimate a frequency resource utilization in the scheduling interval, and a comparator configured to compare the estimated frequency resource utilization with a first threshold. It further comprises a frequency resource allocation circuit configured to increase the frequency resource utilization for the transmission, when the estimated frequency resource utilization is equal to or below the first threshold, and to adjust a link adaptation for the transmission based on the increased frequency resource utilization, wherein the frequency resource allocation circuit (530) is further configured to adjust the link adaptation through adjusting at least one of a modulation and a code rate.

An advantage of particular embodiments is to allow for improved LA and decoding performance due to a smoother and more predictable interference profile. A smoother interference profile is especially important for cell-edge UEs which are more affected by inter-cell interference.

### BRIEF DESCRIPTION OF THE DRAWINGS

**Figure 1** illustrates schematically a conventional wireless communications system.
**Figure 2a** illustrates the frequency resource utilization for three UEs in a scheduling interval.
**Figure 2b** illustrates required SINR as a function of frequency resource blocks for a scheduling interval, and a mean value of SINR.
**Figure 3a** illustrates the frequency resource utilization for a scheduling interval according to an embodiment.
**Figure 3b** is a state diagram illustrating the possibilities of decreasing a SINR requirement.
**Figures 4a****-b** are flowcharts of the method in the radio node according to embodiments.
**Figures 5a-5b** **and** **6** illustrate schematically a radio node according to embodiments.
**Figure 7a****-d** are comparisons between prior art and embodiments in terms of required and mean SINR.

### DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, it will be apparent to one skilled in the art that other embodiments that depart from these specific details exist.

Moreover, those skilled in the art will appreciate that while the embodiments are primarily described in form of a method and a node, they may also be embodied in a computer program product as well as in a system comprising a computer processor and a memory coupled to the processor, wherein the memory is encoded with one or more programs that may perform the method steps disclosed herein.

Embodiments are described herein by way of reference to particular example scenarios. Particular aspects are described in a non-limiting general context in relation to an LTE system. It should though be noted that the embodiments may also be applied to other types of radio access networks using scheduling and LA.

A problem of high SINR requirements and high interference variances due to a traditional resource allocation prioritizing a high spectral efficiency is addressed in embodiments of the invention. A frequency resource utilization in a scheduling interval is estimated and compared with a threshold. When the estimated utilization is below or equal to the threshold, the frequency resource utilization of each transmission in the scheduling interval may be increased. The increased frequency resource utilization will allow for an adjustment of the LA for the transmissions, as a higher frequency resource utilization allow for a reduced SINR requirement and thus a reduced modulation order and/or coding rate.

This disclosure thus relates to a utilization of empty portions of the available frequency resources in order to provide a lower spectral efficiency. A lower spectral efficiency will result in a higher frequency resource utilization at all times, which may e.g. allow for a decreased total transmit power compared to conventional schemes. In other words, it is proposed to decrease the spectral efficiency while ensuring that this reduced spectral efficiency does not become a bottleneck for the network performance. Based on the desired reduced spectral efficiency, a resource allocation is performed that results in a lower SINR requirement. This may in turn allow for a reduced transmit power. The purpose is to exploit a typically low or medium transmission load in cells of a wireless communications system and to relax a requirement of packing transmission data in as few frequency resources as possible.

**Figure 2a** illustrates a scheduling interval with around 50% of the frequency resources utilized by the UEs. In a traditional scheduling, this will be the situation when the traffic load is moderate, as the aim for a high spectral efficiency leads to unutilized resources if there is not enough traffic to serve. According to embodiments, an alternative is to perform a less efficient resource allocation resulting in a higher frequency resource utilization. Thereby a lower order MCS may be chosen. All available frequency resources may be utilized to serve the same moderate traffic load that is traditionally served with only 50% of the frequency resources. Every UE may e.g. occupy twice as much frequency resources. Alternatively more than twice the frequency resources may be allocated to one UE, and less than twice for another. Any other distribution of the resources between the UEs may be performed as an optimization of the resource allocation. A resource allocation utilizing all available resources is illustrated in **Figure 3a****,** which may be compared with the conventional 50% resource utilization of **Figure 2a****.** In **Figure 3a****,** each UE, UE1, UE2, and UE3, has been allocated twice as much frequency resources as in the example illustrated in **Figure 2a****,** although the same amount of data is transmitted.

As already mentioned, the MCS of highest order that satisfies a certain BLER target is chosen based on a resource allocation and a desired number of bits to transmit. In LTE the resource allocation is given as a number of Physical Resource Blocks (PRB), and the desired number of bits to transmit is given as a TBS. The chosen MCS requires a SINR level, which for a given channel and for a given UE could be translated into a required transmit power. The higher the required SINR is, the higher the required transmit power. However, if more frequency resources may be allocated to transmit the same TBS, i.e. more PRB are allocated for the same TBS which is possible when the load is low or moderate and there is no need to optimize the spectral efficiency, the LA may be adjusted to use a lower order MCS. This will in turn lead to a reduced SINR requirement, and for a specific UE and specific channel conditions, a lower transmit power per PRB is needed.

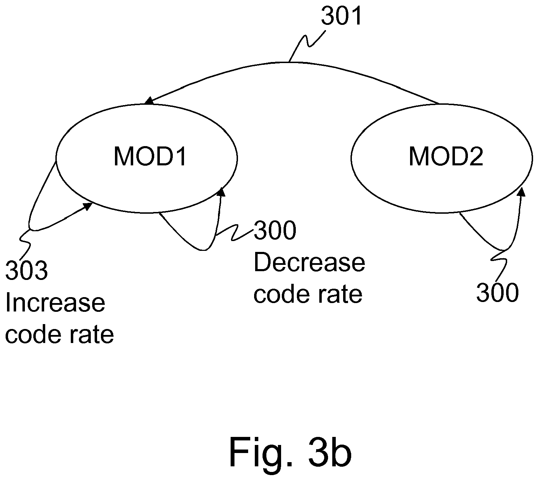

An adjustment of the LA may be performed by decreasing a code rate while still utilizing a same modulation order. However, other alternatives of adjusting the LA are also possible as may be seen in the state diagram in **Figure 3b****,** summarizing the alternatives to achieve a lower required SINR for the same TBS when using a larger frequency resource allocation and maintaining the same BLER target. In one alternative a lower modulation order 301 is applied, while keeping a same code rate. A decrease of the modulation order 301 may also be combined with a decrease of the code rate 300, and even with an increase of the code rate 303 as long as the resulting SINR requirement is lowered.

In order for an eNB to know when the frequency resource utilization may be increased for transmissions in a scheduling interval, the frequency resource utilization is estimated for the scheduling interval based on conventional LA and scheduling. One way to estimate the frequency resource utilization is to use a look up table mapping a given SINR and TBS to a certain frequency resource utilization. The estimated frequency resource utilization may be compared with a first threshold, in order to decide whether an increase of the frequency resource utilization is desired or not. This first threshold may typically be pre-defined, and indicates a limit for the frequency resource utilization. When the estimated frequency resource utilization is equal to or below the threshold, the frequency resource utilization for one or more transmissions in the scheduling interval may be increased and the LA may be adjusted. The estimated frequency resource utilization for all transmissions in the scheduling interval may be used as a basis for how much more frequency resources that may be allocated compared to a conventional scheduling.

In case the estimated frequency resource utilization is above the first threshold, an increased frequency resource utilization may still be possible as long as an average cell load over time is low or moderate. It is only for the case of a continuously high load in the cell that resources must be used in the most efficient way, i.e. that the spectral efficiency must be maximized. For intermittently or occasionally high loads, i.e. bursty traffic under short or non-continuous periods of time, a spreading of the bursts in time and frequency may allow for a homogeneous resource utilization, which in turn leads to a smooth inter-cell interference profile. Therefore, when the estimated frequency resource utilization is above the first threshold indicating a high frequency resource usage for the scheduling interval, it may also be checked if the average transmission load in the cell is below a second threshold, which would mean that the present high frequency resource utilization is an exception seen over time. In order to make it possible to increase the frequency resource utilization in the scheduling interval, delay tolerant bits in the transmissions may be excluded from the transmissions in a current scheduling interval, and may be delayed to a transmission in a subsequent scheduling interval. This will allow for an increase of the frequency resource utilization in the transmissions, depending on how many delay tolerant bits that have been excluded, which will in turn allow for an adjustment of the LA.

The average cell load may be available in the radio node or may be retrieved from the network. The average cell load may e.g. be calculated as an average over different averaging periods, such as the last 60 seconds or the last few seconds. Depending on the averaging period, different results may be expected. If the averaging period is short and a measurement of the cell load is initiated at the start of a burst, the average cell load may be overestimated. Therefore, it may be better to utilize a dynamic second threshold, rather than a pre-defined one. The updates of the dynamic second threshold may be based on e.g. an amount of incoming traffic since delaying of bits was initiated. An average burst period may be computed, and when bits have been delayed and the incoming traffic burst seems to be larger than the average burst length, it may be advantageous to decrease the second threshold so that the delaying of delay tolerant bits is stopped. Otherwise there may be a risk to create a too large backlog of data for transmission.

In alternative embodiments, the increase of the frequency resource utilization may be applied to certain identified UEs. In one embodiment, downgraded UEs or UEs with low-tier subscriptions may be addressed. When a certain UE has surpassed its traffic quota, or if a UE has a low-tier subscription i.e. a limit on connection speed, the UE is e.g. not allowed to have download and upload rates higher than a predetermined value. The conventional way of solving such a situation is by limiting the number of resource blocks allocated to the UE while still performing LA and scheduling in a way that maximizes the spectral efficiency, even if the UE is the only UE transmitting in a given cell. By instead limiting the download/upload rate although increasing the frequency resource usage according to embodiments, a throughput limitation would be achieved while simultaneously creating a smooth interference to other cells.

In an alternative embodiment, UEs with limited battery life may be addressed. Regardless of the amount of traffic to be transmitted, the frequency resource utilization for UEs with limited battery life may be increased allowing them to transmit their data on more resources than an optimal MCS selection would allow. The UE may then need less power to transmit its data as the LA may be adjusted which allows for a lower SINR or a lower transmit power.

In one embodiment, the increase of the frequency resource utilization for one or more transmissions of a scheduling interval, and the adjustment of the LA in the scheduling interval, is followed by a decrease of the transmit power for the scheduling interval. How much the transmit power may be decreased is dependent on how the LA is adjusted. One embodiment relates to an eNB of an LTE system. For the uplink, two alternatives to control the transmit power from the UE ar possible:
1. Using the UE-specific closed loop power control commands (accumulated or absolute).
2. Using the UE-specific RRC configuration of received target power.

For the downlink, a UE-specific RRC configuration may be used to signal the power allocation of the eNodeB.

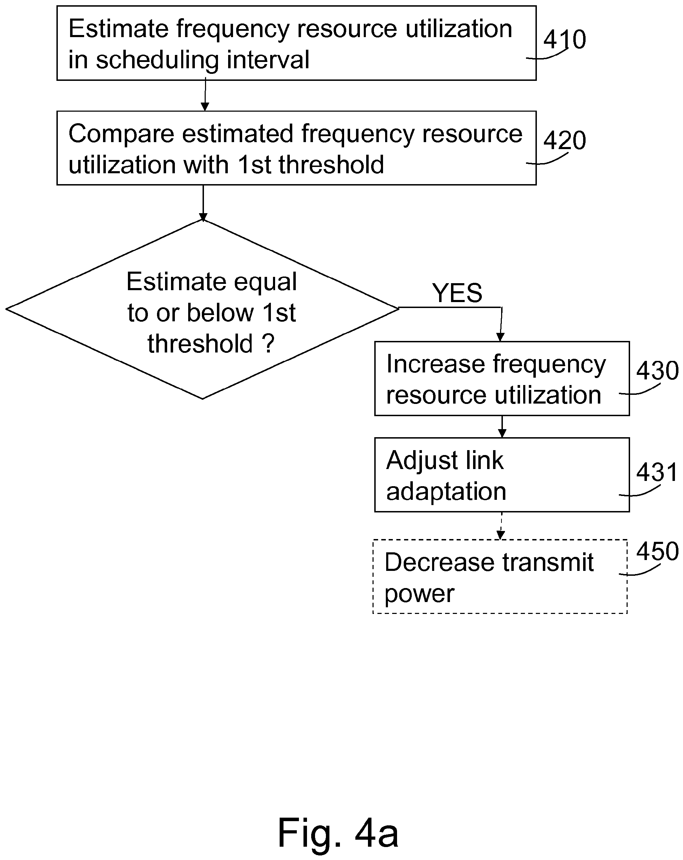

**Figure 4a** is a flowchart of the method in a radio node of a wireless communication system, of reducing a signal to noise and interference ratio requirement for one or more transmissions in a scheduling interval, according to embodiments of the invention. The radio node is in one embodiment an eNB in an LTE system. The transmissions are performed in a cell served by the radio node. The method comprises:
- 410: Estimate the frequency resource utilization in the scheduling interval according to a conventional scheduling method, e.g. by using a look-up table.
- 420: Compare the estimated frequency resource utilization with a first threshold. The first threshold may be pre-defined.

When the estimated frequency resource utilization is equal to or below the first threshold, which is the case when the load in the cell is low or medium high, the method further comprises:
- 430: Increase the frequency resource utilization for one or more of the transmissions. How many extra frequency resources that may be used is dependent on what the estimated frequency resource utilization was. If the estimated resource utilization is 50%, then the frequency resource utilization for each transmission may be doubled. It is of course also possible to increase the frequency resource utilization for some of the transmissions more than for others.
- 431: Adjust the link adaptation for the transmissions based on the increased frequency resource utilization. Either the modulation or the code rate or both may be adjusted. This will give a decreased mean SINR requirement, and a smoother inter-cell interference variance.
- 450: Optionally, the method further comprises decreasing the transmit power for the scheduling interval based on the adjusted link adaptation.

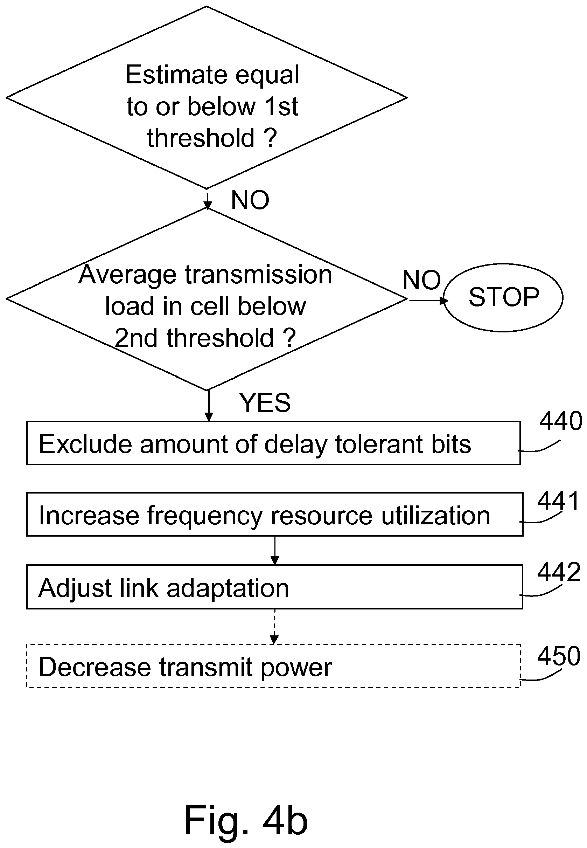

**Figure 4b** is a flowchart of the method that is performed after the comparison in 420, when the estimated frequency resource utilization is found to be above the first threshold, according to embodiments of the invention. This flowchart covers the method performed in case of bursty traffic, with high load in the cell during a short period of time. When an average transmission load in the cell is below a second threshold, the method further comprises the following:
- 440: Exclude an amount of delay tolerant bits from the transmissions. Some bits of a transmission block may tolerate a delay of at least one scheduling interval, and may thus be excluded from the transmission and left to a transmission in one of the following scheduling intervals.
- 441: Increase the frequency resource utilization for the transmissions based on the excluded amount of delay tolerant bits. If half of the bits are excluded and delayed to the following scheduling intervals, the frequency resource utilization may be doubled for the remaining bits of the transmission.
- 442: Adjust the link adaptation for the transmissions based on the increased frequency resource utilization. This step is equivalent to step 431 described above, and may also be followed by the optional step of decreasing 450 the transmit power.

When the average transmission load in the cell is equal to or above the second threshold, the inventive method will not be used (illustrated by the STOP sign), and the scheduling may thus be performed in a conventional way with a high spectral efficiency. This is the case when the load is high during a longer period, which will make it difficult to transmit delay tolerant bits in subsequent scheduling intervals, as the frequency resource utilization is above the first threshold in many subsequent scheduling intervals.

The second threshold may be dynamically updated. This may be done e.g. based on a comparison of the burst length with an average burst length. If the burst is longer than an average burst, the second threshold may be decreased in order to control the exclusion of delay tolerant bits.

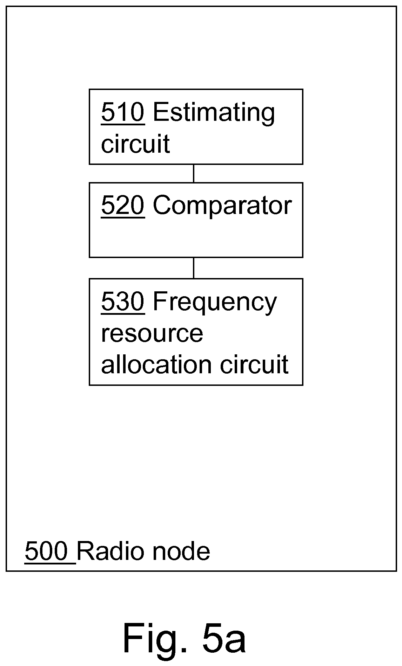

The radio node is schematically illustrated in **Figures 5a-5b****,** according to embodiments. The radio node 500 is configured to be used in a wireless communications system and may in one embodiment be an eNB in an LTE system. The radio node 500 is also configured to reduce a SINR requirement for one or more transmissions in a scheduling interval, where the transmissions are performed in a cell served by the radio node. The radio node 500 comprises an estimating circuit 510 configured to estimate a frequency resource utilization in said scheduling interval, and a comparator 520 configured to compare the estimated frequency resource utilization with a first threshold. The first threshold may be pre-defined. It also comprises a frequency resource allocation circuit 530 configured to increase the frequency resource utilization for the transmissions, when the estimated frequency resource utilization is equal to or below the first threshold, and to adjust a LA for the transmissions based on the increased frequency resource utilization. The LA adjustment may correspond to a modulation adjustment and/or a code rate adjustment.

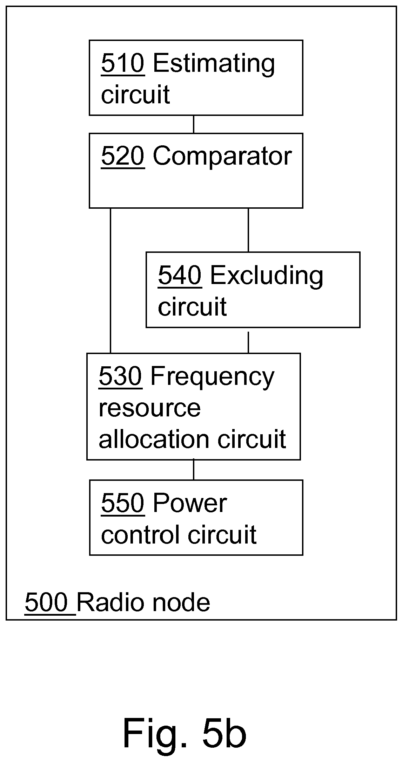

In **Figure 5b****,** the radio node 500 further comprises an excluding circuit 540 configured to exclude an amount of delay tolerant bits from the transmissions, when the estimated frequency resource utilization is above the first threshold, and an average transmission load in said cell is below a second threshold. The second threshold may be dynamically updated in order to control the exclusion of delay tolerant bits. The frequency resource allocation circuit 530 is then also further configured to increase the frequency resource utilization for the transmissions based on the excluded amount of delay tolerant bits. Furthermore, the radio node 500 may further comprise a power control circuit 550 configured to decrease the transmit power for the scheduling interval based on the adjusted LA (modulation and/or code rate adjustment).

The circuits and units described above with reference to **Figure 5a** are logical units and do not necessarily correspond to separate physical units.

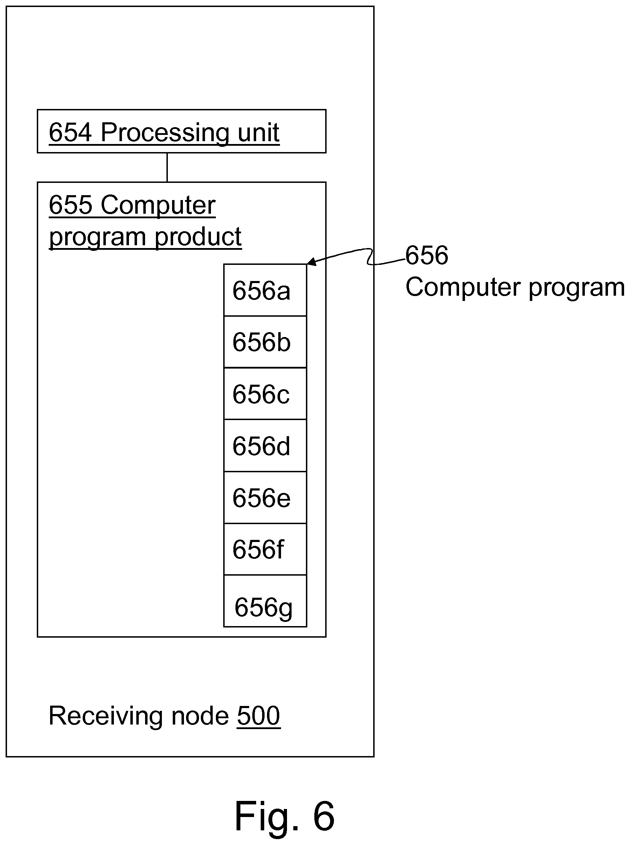

**Figure 6** schematically illustrates an embodiment of the radio node 500, which is an alternative way of disclosing the embodiment illustrated in **Figure 5b****.** The radio node 500 comprises a processing unit 654 which may be a single unit or a plurality of units. Furthermore, the radio node 500 comprises at least one computer program product 655 in the form of a non-volatile memory, e.g. an EEPROM (Electrically Erasable Programmable Read-Only Memory), a flash memory or a disk drive. The computer program product 655 comprises a computer program 656, which comprises code means which when run on the radio node 500 causes the processing unit 654 on the receiving node 500 to perform the steps of the procedures described earlier in conjunction with **Figures 4a-4b****.**

Hence in the embodiments described, the code means in the computer program 656 of the radio node 500 comprises an estimating module 656a for, a comparator module 656b for, a frequency resource allocation module 656c for, an excluding module 656d for, and a power control module 656e for. The code means may thus be implemented as computer program code structured in computer program modules. The modules 656a-e essentially perform the steps of the flow in **Figure 4a****-b** to emulate the radio node described in **Figure 5b****.** In other words, when the different modules 656a-e are run on the processing unit 654, they correspond to the circuits and units 510-550 of **Figure 5b****.**

Although the code means in the embodiment disclosed above in conjunction with **Figure 6** are implemented as computer program modules which when run on the radio node 500 causes the node to perform steps described above in the conjunction with **Figures 4a-4b****,** one or more of the code means may in alternative embodiments be implemented at least partly as hardware circuits.

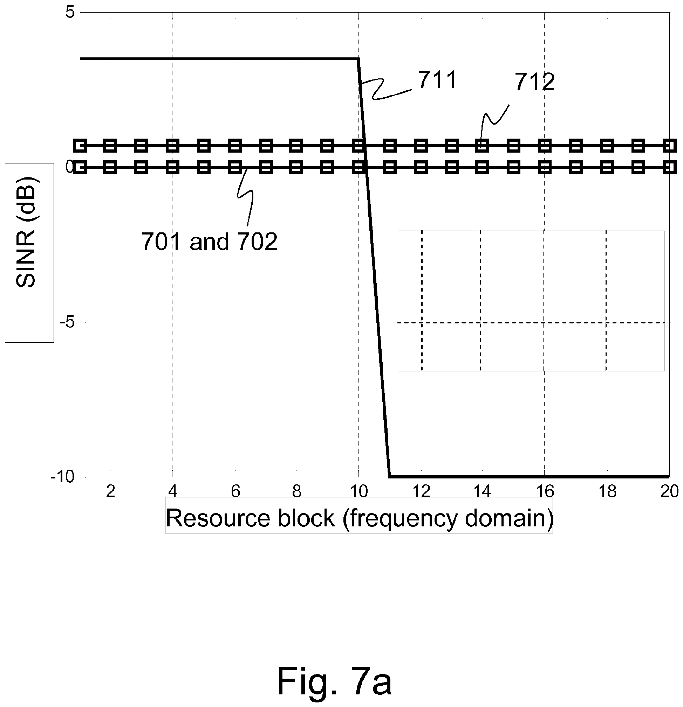

The examples A-D hereinafter described with reference to an LTE system and to **Figures 7a****-d,** illustrate the advantages of a resource allocation utilizing the whole bandwidth when the system is not fully loaded. The advantages are illustrated by quantifying the achievable gains in terms of a resulting mean SINR level. In all the examples A-D, an estimated frequency resource utilization of 50% is assumed. According to a conventional resource allocation, only half of the available spectrum would be used at a given time instant. If a UE is allocated 10 PRB according to the conventional method, an allocation of twice as much PRB, i.e. 20 PRB, is thus possible for the same UE according to embodiments of the invention. Different modulation orders are examined in the examples, and the required absolute SINR level and the mean SINR level, i.e. the SINR level averaged over all PRB for both the conventional and the inventive resource allocation are illustrated. Reference numeral 701 corresponds to the required SINR level and 702 to the mean SINR level for the inventive resource allocation. Reference numeral 711 corresponds to the required SINR level and 712 to the mean SINR level for the traditional resource allocation.

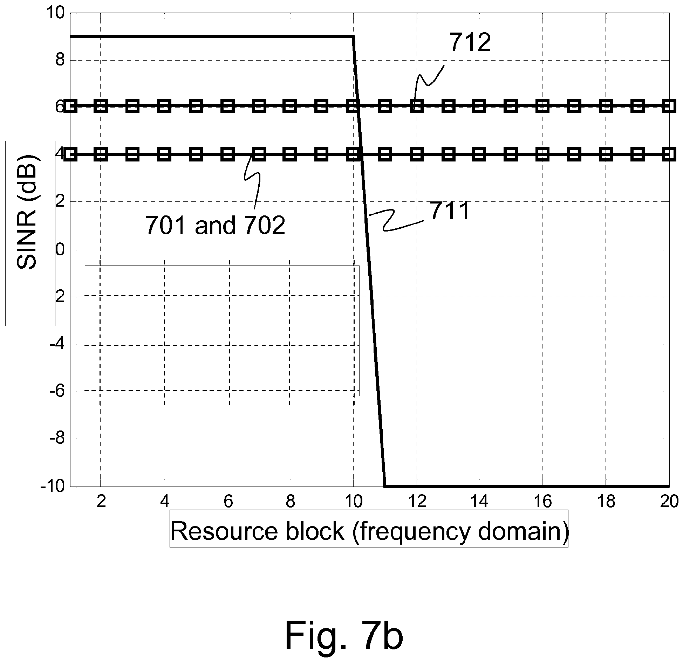

**Example A described with reference to** **Figure 7a****:** A Quadrature Phase Shift Keying (QPSK) modulation is used. Conventionally, for a resource allocation of 10 PRB, and a TBS of 1544 bits, an MCS of 9 corresponding to a certain modulation and code rate should be used. The MCS values and their relation to the TBS and the number of PRB are standardized and can be found in the 3GPP specification 36.213. In this case the SINR requirement is 3.5dB. If the number of allocated frequency resources is doubled, i.e. to 20 PRB, there is no corresponding TBS of 1544 bits, so the next larger TBS of 1736 bits is chosen. As the number of PRB is increased, it is possible to adjust the MCS to 5 instead of 9. An MCS of 5 corresponds to a SINR requirement of 0dB. In **Figure 7a****,** as well as in **Figures 7b****-c,** the resulting difference between the two cases is illustrated by using the mean required SINR per PRB. The mean required SINR per PRB is simply computed as the average SINR over all the PRB in the linear domain. For the case when all the PRB are utilized, the mean required SINR will always coincide with the required SINR. For the conventional method when only half of the available PRB are utilized, the average SINR will simply be the half of the SINR in the utilized PRB in the linear domain. For illustration purposes, a floor of -10dB is set for the not utilized PRB. In practice this does not cause a problem as there may be some interference and noise power which simply act as an offset.

The conclusion for example A is thus that a SINR of 0dB per PRB is needed when using 20 PRB, whereas a SINR of 3.5dB per PRB is needed when using 10 PRB. When using 10 PRB only, 10 PRB are left unused and in some sense wasted in case of a low or medium load, and the mean required SINR per PRB will in this case be higher than the mean SINR level of 0dB valid when allocating 20 PRB instead. Several advantages may thus be observed when alocating 20 PRB instead of 10 PRB to the UE:
1. A lower variance in the interference profile is obtained.
2. A lower mean SINR per PRB is required, which may allow for a lower total transmit power. Reducing the transmit power provides in turn two main advantages:
   o A total interference power will be decreased;
   o For the uplink, fewer UEs will be power limited and thus coverage may be increased.

**Example B described with reference to** **Figure 7b****:** A 16 Quadrature Amplitude Modulation (QAM) is used. Conventionally, for a resource allocation of 10 PRB, and a TBS of 3112 bits, an MCS of 16 is used. In this case the SINR requirement is 9dB. If the number of allocated frequency resources is doubled, i.e. to 20 PRB, for a TBS of 3112 bits, the MCS may be adjusted to 10, which corresponds to a SINR requirement of 4dB. A similar analysis and the same advantages are valid in example B as in example A.

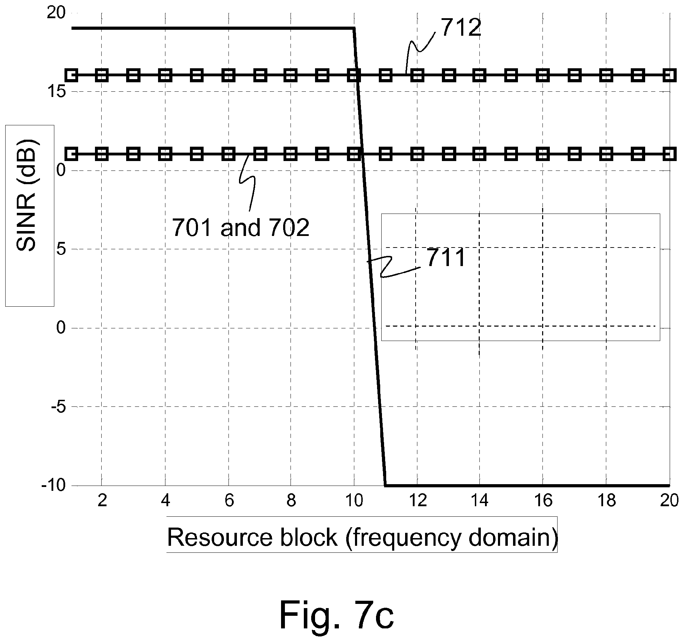

**Example C described with reference to** **Figure 7c****:** A 64QAM modulation is used. Conventionally, for a resource allocation of 10 PRB, and a TBS of 6200 bits, an MCS of 27 is used. In this case the SINR requirement is 19dB. If the number of allocated frequency resources is doubled, i.e. to 20 PRB, for a TBS of 6200 bits, the MCS may be adjusted to 17, which corresponds to a SINR requirement of 11dB. A similar analysis and the same advantages are valid in example C as in examples A and B.

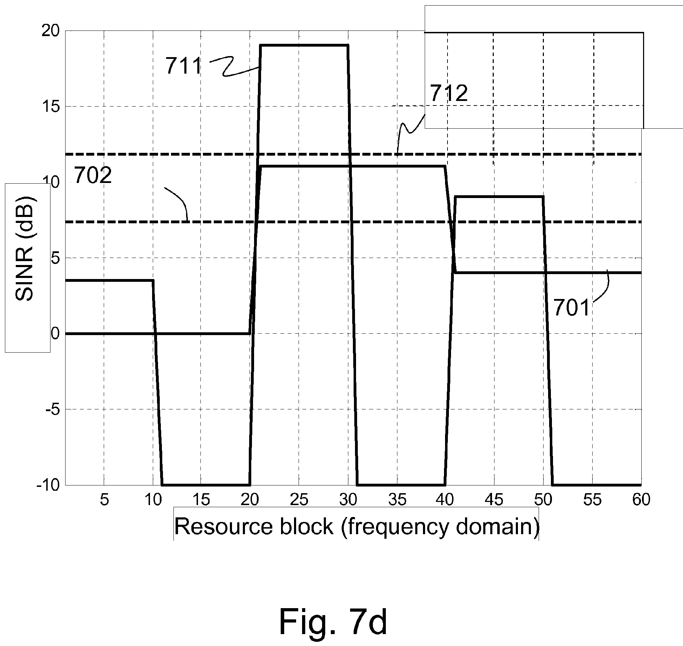

**Example D described with reference to** **Figure 7d****:** The resource allocation shown in **Figure 2a** is compared with the resource allocation shown in **Figure 3a****.** The corresponding SINR requirement as a function of the PRB is illustrated in **Figure 7d****,** and is based on the previous three examples A-C, which are simply combined into one graph. The high variance in the required SINR level for the different PRB when only half of the PRB are used according to a conventional frequency resource allocation, results in a high variance in the inter-cell interference profile. The example illustrates that the variance is significantly lower when all the frequency resources are allocated. Furthermore, the mean SINR is lower.

The above mentioned and described embodiments are only given as examples and should not be limiting. Other solutions, uses, objectives, and functions within the scope of the accompanying claims should be apparent for the person skilled in the art.

### ABBREVIATIONS

- 3GPP: 3rd Generation Partnership Program
- BLER: Block Error Rate
- CN: Core Network
- eNB: Evolved Node B
- E-UTRAN: Evolved UTRAN
- ICIC: Inter-Cell Interference Coordination
- LA: Link Adaptation
- LTE: Long Term Evolution
- MCS: Modulation and Coding Scheme
- PRB: Physical Resource Block
- QAM: Quadrature Amplitude Modulation
- QPSK: Quadrature Phase Shift Keying
- RAN: Radio Access Network
- RBS: Radio Base Station
- RRM: Radio Resource Management
- SINR: Signal to Interference and Noise Ratio
- TBS: Transport Block Size
- UE: User Equipment
- UMTS: Universal Mobile Telecommunications System
- UTRAN: Universal Terrestrial RAN

## Claims

1. A method in a radio node of a wireless communications system, of reducing a signal to noise and interference ratio requirement for at least one transmission in a scheduling interval, the at least one transmission being performed in a cell served by the radio node, the method comprising:
- estimating (410) a frequency resource utilization in the scheduling interval;
- comparing (420) the estimated frequency resource utilization with a first threshold; and
- when the estimated frequency resource utilization is equal to or below the first threshold, the method further comprising:
- increasing (430) the frequency resource utilization for the at least one transmission in such a manner as to allocate all resource blocks in the scheduling interval for corresponding transmissions; and
- adjusting (431) a link adaptation for the at least one transmission based on the increased frequency resource utilization, wherein adjusting (431) the link adaptation comprises adjusting at least one of a modulation and a code rate.

2. The method according to claim 1, wherein when the estimated frequency resource utilization is above the first threshold, and an average transmission load in the cell is below a second threshold, the method further comprising:
- excluding (440) an amount of delay tolerant bits from the at least one transmission;
- increasing (441) the frequency resource utilization for the at least one transmission based on the excluded amount of delay tolerant bits; and
- adjusting (442) the link adaptation for the at least one transmission based on the increased frequency resource utilization.

3. The method according to any of the claims 1-2, further comprising decreasing (450) a transmit power for the scheduling interval based on the adjusted link adaptation.

4. The method according to any of the claims 1-3, wherein the first threshold is pre-defined.

5. The method according to any of the claims 1-4, wherein the second threshold is dynamically updated.

6. A radio node (500) configured to be used in a wireless communications system, and to reduce a signal to noise and interference ratio requirement for at least one transmission in a scheduling interval, the at least one transmission being performed in a cell served by the radio node, the radio node comprising:
- an estimating circuit (510) configured to estimate a frequency resource utilization in the scheduling interval;
- a comparator (520) configured to compare the estimated frequency resource utilization with a first threshold; and
- a frequency resource allocation circuit (530) configured to increase the frequency resource utilization for the at least one transmission in such a manner as to allocate all resource blocks in the scheduling interval for corresponding transmissions, when the estimated frequency resource utilization is equal to or below the first threshold, and to adjust a link adaptation for the at least one transmission based on the increased frequency resource utilization,
wherein the frequency resource allocation circuit (530) is further configured to adjust the link adaptation through adjusting at least one of a modulation and a code rate.

7. The radio node (500) according to claim 6, further comprising:
- an excluding circuit (540) configured to exclude an amount of delay tolerant bits from the at least one transmission, when the estimated frequency resource utilization is above the first threshold, and an average transmission load in the cell is below a second threshold;
and wherein the frequency resource allocation circuit (530) is further configured to increase the frequency resource utilization for the at least one transmission based on the excluded amount of delay tolerant bits.

8. The radio node (500) according to any of claims 6-7, further comprising a power control circuit (550) configured to decrease a transmit power for the scheduling interval based on the adjusted link adaptation.

9. The radio node according to any of claims 6-8, wherein the first threshold is predefined.

10. The radio node according to any of claims 6-9, wherein the second threshold is dynamically updated.

11. The radio node according to any of claims 6-10, wherein the radio node is an evolved NodeB of an LTE system.

## Patentansprüche

1. Verfahren in einem Funkknoten eines drahtlosen Kommunikationssystems zur Verringerung einer Anforderung eines Signal-Rausch- und -Interferenz-Verhältnisses für mindestens eine Übertragung in einem Zeitplanintervall, wobei die mindestens eine Übertragung in einer Zelle durchgeführt wird, die von dem Funkknoten bedient wird, wobei das Verfahren Folgendes umfasst:
- Schätzen (410) einer Frequenzressourcenverwendung in dem Zeitplanintervall;
- Vergleichen (420) der geschätzten Frequenzressourcenverwendung mit einer ersten Schwelle; und
- das Verfahren, wenn die geschätzte Frequenzressourcenverwendung gleich oder unter der ersten Schwelle ist, ferner Folgendes umfasst:
- Erhöhen (430) der Frequenzressourcenverwendung für die mindestens eine Übertragung auf eine solche Weise, dass alle Ressourcenblöcke in dem Zeitplanintervall für entsprechende Übertragungen zugewiesen werden; und
- Anpassen (431) einer Linkadaptation für die mindestens eine Übertragung auf Grundlage der erhöhten Frequenzressourcenverwendung, wobei das Anpassen (431) der Linkadaptation das Anpassen von mindestens einem von einer Modulation und einer Coderate umfasst.

2. Verfahren nach Anspruch 1, wobei, wenn die geschätzte Frequenzressourcenverwendung über der ersten Schwelle ist, und eine durchschnittliche Übertragungslast in der Zelle unter einer zweiten Schwelle ist, das Verfahren ferner Folgendes umfasst:
- Ausschließen (440) einer Menge an verzögerungstoleranten Bits aus der mindestens einen Übertragung;
- Erhöhen (441) der Frequenzressourcenverwendung für die mindestens eine Übertragung auf Grundlage der ausgeschlossenen Menge an verzögerungstoleranten Bits; und
- Anpassen (442) der Linkadaptation für die mindestens eine Übertragung auf Grundlage der erhöhten Frequenzressourcenverwendung.

3. Verfahren nach einem der Ansprüche 1-2, ferner umfassend das Reduzieren (450) einer Übertragungsleistung für das Zeitplanintervall auf Grundlage der angepassten Linkadaptation.

4. Verfahren nach einem der Ansprüche 1-3, wobei die erste Schwelle vordefiniert ist.

5. Verfahren nach einem der Ansprüche 1-4, wobei die zweite Schwelle dynamisch aktualisiert wird.

6. Funkknoten (500), der konfiguriert ist, um in einem drahtlosen Kommunikationssystem verwendet zu werden, und um eine Anforderung eines Signal-Rausch- und -Interferenz-Verhältnisses für mindestens eine Übertragung in einem Zeitplanintervall zu verringern, wobei die mindestens eine Übertragung in einer Zelle durchgeführt wird, die von dem Funkknoten bedient wird, wobei der Funkknoten Folgendes umfasst:
- eine Schätzschaltung (510), die konfiguriert ist, um eine Frequenzressourcenverwendung in dem Zeitplanintervall zu schätzen;
- einen Vergleicher (520), der konfiguriert ist, um die geschätzte Frequenzressourcenverwendung mit einer ersten Schwelle zu vergleichen; und
- eine Frequenzressourcenzuweisungsschaltung (530), die konfiguriert ist, um die Frequenzressourcenverwendung für die mindestens eine Übertragung auf eine solche Weise zu erhöhen, dass alle Ressourcenblöcke in dem Zeitplanintervall für entsprechende Übertragungen zugewiesen werden, wenn die geschätzte Frequenzressourcenverwendung gleich oder unter der ersten Schwelle ist, und um eine Linkadaptation für die mindestens eine Übertragung auf Grundlage der erhöhten Frequenzressourcenverwendung anzupassen,
wobei die Frequenzressourcenzuweisungsschaltung (530) ferner konfiguriert ist, um die Linkadaptation durch Anpassen von mindestens einem von einer Modulation und einer Coderate anzupassen.

7. Funkknoten (500) nach Anspruch 6, ferner umfassend:
- eine Ausschlussschaltung (540), die konfiguriert ist, um eine Menge an verzögerungstoleranten Bits aus der mindestens einen Übertragung auszuschließen, wenn die geschätzte Frequenzressourcenverwendung über der ersten Schwelle ist und eine durchschnittliche Übertragungslast in der Zelle unter einer zweiten Schwelle ist;
und wobei die Frequenzressourcenzuweisungsschaltung (530) ferner konfiguriert ist, um die Frequenzressourcenverwendung für die mindestens eine Übertragung auf Grundlage der ausgeschlossenen Menge an verzögerungstoleranten Bits zu erhöhen.

8. Funkknoten (500) nach einem der Ansprüche 6-7, ferner umfassend eine Leistungssteuerungsschaltung (550), die konfiguriert ist, um eine Übertragungsleistung für das Zeitplanintervall auf Grundlage der angepassten Linkadaptation zu reduzieren.

9. Funkknoten nach einem der Ansprüche 6-8, wobei die erste Schwelle vordefiniert ist.

10. Funkknoten nach einem der Ansprüche 6-9, wobei die zweite Schwelle dynamisch aktualisiert wird.

11. Funkknoten nach einem der Ansprüche 6-10, wobei der Funkknoten ein Evolved Node B eines LTE-Systems ist.

## Revendications

1. Procédé dans un noeud radio d'un système de communication sans fil, pour réduire une exigence de rapport de signal sur bruit plus brouillage pour au moins une transmission dans un intervalle de planification, l'au moins une transmission étant réalisée dans une cellule desservie par le noeud radio, le procédé comprenant :
- l'estimation (410) d'une utilisation de ressources de fréquence dans l'intervalle de planification ;
- la comparaison (420) de l'utilisation estimée de ressources de fréquence à un premier seuil ; et
- lorsque l'utilisation estimée de ressources de fréquence est égale ou inférieure au premier seuil, le procédé comprenant en outre :
- l'augmentation (430) de l'utilisation de ressources de fréquence pour l'au moins une transmission de manière à attribuer tous les blocs de ressources dans l'intervalle de planification pour des transmissions correspondantes ; et
- l'ajustement (431) d'une adaptation de liaison pour l'au moins une transmission sur la base de l'utilisation augmentée de ressources de fréquence, dans lequel l'ajustement (431) de l'adaptation de liaison comprend l'ajustement d'au moins une modulation et d'un taux de code.

2. Procédé selon la revendication 1, dans lequel lorsque l'utilisation estimée de ressources de fréquence est au-dessus du premier seuil, et une charge de transmission moyenne dans la cellule est en dessous d'un second seuil, le procédé comprenant en outre :
- l'exclusion (440) d'une quantité de bits tolérants à un retard d'au moins une transmission ;
- l'augmentation (441) de l'utilisation de ressources de fréquence pour l'au moins une transmission sur la base de la quantité exclue de bits tolérants à un retard ; et
- l'ajustement (442) de l'adaptation de liaison pour l'au moins une transmission sur la base de l'utilisation augmentée de ressources de fréquence.

3. Procédé selon l'une quelconque des revendications 1 à 2, comprenant en outre la diminution (450) d'une puissance d'émission pour l'intervalle de planification sur la base de l'adaptation de liaison ajustée.

4. Procédé selon l'une quelconque des revendications 1 à 3, dans lequel le premier seuil est prédéfini.

5. Procédé selon l'une quelconque des revendications 1 à 4, dans lequel le second seuil est ajusté dynamiquement.

6. Noeud radio (500) configuré pour être utilisé dans un système de communication sans fil et pour réduire une exigence de rapport signal sur bruit plus brouillage pour au moins une transmission dans un intervalle de planification, l'au moins une transmission étant réalisée dans une cellule desservie par le noeud radio, le noeud radio comprenant :
- un circuit d'estimation (510) configuré pour estimer une utilisation de ressources de fréquence dans l'intervalle de planification ;
- un comparateur (520) configuré pour comparer l'utilisation estimée de ressources de fréquence à un premier seuil ; et
- un circuit d'attribution de ressources de fréquence (530) configuré pour augmenter l'utilisation de ressources de fréquence pour l'au moins une transmission de manière à attribuer tous les blocs de ressources dans l'intervalle de planification pour des transmissions correspondantes, lorsque l'utilisation estimée de ressources de fréquence est égale ou inférieure au premier seuil, et pour ajuster une adaptation de liaison pour l'au moins une transmission sur la base de l'utilisation augmentée de ressources de fréquence,
dans lequel le circuit d'attribution de ressources de fréquence (530) est en outre configuré pour ajuster l'adaptation de liaison par le biais d'un ajustement d'au moins un d'une modulation et d'un taux de code.

7. Noeud radio (500) selon la revendication 6, comprenant en outre :
- un circuit d'exclusion (540) configuré pour exclure une quantité de bits tolérants à un retard de l'au moins une transmission, lorsque l'utilisation estimée de ressources de fréquence est au-dessus du premier seuil, et une charge de transmission moyenne dans la cellule est en dessous d'un second seuil ;
et dans lequel le circuit d'attribution de ressources de fréquence (530) est en outre configuré pour augmenter l'utilisation de ressources de fréquence pour l'au moins une transmission sur la base de la quantité exclue de bits tolérants à un retard.

8. Noeud radio (500) selon l'une quelconque des revendications 6 à 7, comprenant en outre un circuit de commande de puissance (550) configuré pour diminuer une puissance d'émission pour l'intervalle de planification sur la base de l'adaptation de liaison ajustée.

9. Noeud radio selon l'une quelconque des revendications 6 à 8, dans lequel le premier seuil est prédéfini.

10. Noeud radio selon l'une quelconque des revendications 6 à 9, dans lequel le second seuil est mis à jour dynamiquement.

11. Noeud radio selon l'une quelconque des revendications 6 à 10, dans lequel le noeud radio est un noeud B évolué d'un système LTE.
